# EUROPEAN PATENT APPLICATION

(11) **EP 1 667 051 A2**
(43) Date of publication of application: **07.06.2006**
(21) Application number: 05111520.2
(22) Date of filing: 30.11.2005
(51) Int. Cl.: G06K 15/00

(54) **Image Forming Apparatus**

(30) Priority: 03.12.2004 KR 2004101275
(71) Applicant: SAMSUNG ELECTRONICS CO., LTD., Suwon-si Gyeonggi-do 442-742 (KR)
(72) Inventor: Choi, Young-woo, Geumcheon-gu Seoul (KR)
(74) Representative: Walaski, Jan Filip

(57) **Abstract**

An image forming device, a host device connected to the image forming device, an image forming system, and a controlling method thereof. The image forming device includes a customer replaceable unit memory (CRUM) provided to a recording material storage medium to store latest version information of firmware of the image forming device, and a controller to collect present version information of the firmware of the image forming device and to provide an old version notification message if the present version information of the firmware of the image forming device is old compared to the latest version information. Accordingly, a user can update the firmware or software conveniently.

## Description

The present invention relates to an image forming apparatus, particularly but not exclusively to a printer having a print cartridge including a memory device for storing information relating to firmware of the printer and/or printing software of a host device.

Image forming devices print images corresponding to received image data on recording media, such as printing paper. Typical examples of image forming device are printers, copiers, fax machines, etc. These image forming devices are generally connected to host devices including personal computers, notebooks, portable information processing devices, such as PDAs (Personal Digital Assistants), and so forth, and exchange data and information with the host devices. Hereinafter, a combination of one or more image forming devices and host devices will be commonly referred to as an 'image forming system'.

In general, an image forming device and a host device include a variety of firmware and/or software relating to image formation. Using the firmware and/or software, the image forming system can execute the image forming process and other additional functions. However, the firmware or the software may need tobe updated regularly, for instance due to errors being discovered in the firmware or software, or additional functions being added to the firmware and/or software.

In order to update the firmware or the software in a conventional image forming system, users conventionally have to manually check whether new releases of the firmware or the software are available. If a new version of the firmware or the software is released, the user would then need to perform an internet search of websites offering downloads of the new version of firmware and/or software. Such tasks can require a large amount of time and effort on the part of users. Accordingly, updating the firmware and/or software in conventional image forming systems can be inconvenient for users.

Embodiments of the present invention provide an image forming device, a host device connected to the image forming device, an image forming system and a controlling method thereof, in which versions of firmware of the image forming device, software of the host device, and firmware/software stored in a customer replaceable unit memory are compared and a comparison result is provided to a user so that the user is granted with an opportunity to update the firmware or the software as desired.

The present invention also provides an image forming device, a host device connected to the image forming device, an image forming system and a controlling method thereof, in which a user is provided with version information, such as information regarding a site that offers a download for a new version of firmware or software, thereby increasing user convenience.

Additional aspects of the present invention will be set forth in part in the description which follows and, in part, will be obvious from the description, or may be learned by practice of the invention.

The foregoing and/or other aspects of the present invention may be achieved by providing an image forming device to form an image using at least one recording material stored in a recording material storage medium, the device including a customer replaceable unit memory (CRUM) provided to the recording material storage medium to store latest version information of firmware of the image forming device, and a controller to collect present version information of the firmware of the image forming device and to provide an old version notification message if the present version information of the firmware of the image forming device is old compared to the latest version information stored in the CRUM.

The image forming device may further include a display unit to display at least one of the old version notification message, information regarding a site offering a download of a latest version of the firmware, and a latest version update request message.

The image forming device may further include a version information management unit to read the latest version information from the CRUM, and to compare the latest version information with the present version information of the firmware of the image forming device.

The image forming device may further include an input unit to input a version check command, wherein the controller collects the present version information of the firmware of the image forming device in response to the input version check command.

The controller may collect the present version information of the firmware of the image forming device when the recording material storage medium is installed in the image forming device.

The foregoing and/or other aspects of the present invention may also be achieved by providing an image forming device connectable to a host device and using at least one recording material stored in a recording material storage medium to form an image, the image forming device including a customer replaceable unit memory (CRUM) provided to the recording material storage medium to store information regarding latest versions of firmware of the image forming device and software of the host device, and a controller to collect information regarding a present version of the firmware of the image forming device and information regarding a present version of the software of the host device, and to provide an old version notification message if the information regarding the present version of the firmware of the image forming device or the information regarding the present version of the software of the host device is old compared to the information regarding the latest versions of the firmware and the software, respectively.

The image forming device may further include a display unit to display at least one of the old version notification message, information regarding a site offering a download of the latest versions of the firmware and the software, a latest version update request message, and a list of present software of the host device.

The image forming device may further include a version information management unit to read the information regarding the latest versions of the firmware and the software from the CRUM, and to compare the information regarding the latest versions of the firmware and the software with the information regarding the present version of the firmware of the image forming device and the information regarding the present version of the software of the host device.

The image forming device may further include an input unit to input a version check command, wherein the controller collects the information regarding the present version of the firmware of the image forming device and the information regarding the present version of the software of the host device in response to the input version check command.

The controller may collect the information regarding the present version of the firmware of the image forming device and the information regarding the present version of the software of the host device when the recording material storage medium is installed in the image forming device.

The foregoing and/or other aspects of the present invention may also be achieved by providing an image forming device, including a replaceable recording material storage medium to store at least one recording material therein and having a replaceable memory unit to store information regarding a latest version of firmware of the image forming device, and a comparison unit to compare a present version of the firmware with the information regarding the latest version of the firmware to determine whether the present version of the firmware is the latest version of the firmware.

The foregoing and/or other aspects of the present invention may also be achieved by providing an image forming device communicating with a host device, the image forming device including a replaceable recording material storage medium to store one or more recording material therein and having a replaceable memory unit to store update information regarding firmware of the image forming device and software of the host device, a controller to access information regarding a present version of the firmware and to request information regarding a present version of the software from the host device, and a version information management unit to determine whether the present versions of the firmware and the software need to be updated based on the update information, the information regarding the present version of the firmware, and the information regarding the present version of the software.

The foregoing and/or other aspects of the present invention may also be achieved by providing a recording material storage medium usable with an image forming device, including a customer replaceable unit memory (CRUM) to store information about a latest version of firmware used in the image forming device.

The foregoing and/or other aspects of the present invention may also be achieved by providing a host device connectable to an image forming device to form an image using at least one recording material stored in a recording material storage medium, the host device including an interface to receive an old version notification signal from the image forming device corresponding to a determination that a present version of firmware of the image forming device or a present version of software of the host device is old compared to latest version information of the firmware of the image forming device or latest version information of the software of the host device, the latest version information being stored in a customer replaceable unit memory provided to the recording material storage medium of the image forming device, and a controller to provide an old version notification message based on the old version notification signal.

The host device may further include a display unit to display at least one of the old version notification message, information regarding sites offering a download of the latest versions of the firmware an the software, a latest version update request message, and a list of present software of the host device.

The host device may further include an input unit to input a version check command, wherein the controller generates a version check request signal based on the version check command and transmits the version check request signal to the image forming device.

The host device may further include a version management program to provide a list of the software of the host device and present version information of the software, wherein the controller transmits the list of the software of the host device and the version information of the software provided by the version management program to the image forming device in response to a version information request signal from the image forming device.

The foregoing and/or other aspects of the present invention may also be achieved by providing an image forming system, including a host device, and an image forming device to communicate with the host device, to compare present version information of firmware of the image forming device and present version information of software of the host device with latest version information of the firmware and the software to determine whether present versions of the firmware and software are latest versions, and comprising a customer replaceable unit memory (CRUM) to store the latest version information of the firmware and the software.

The foregoing and/or other aspects of the present invention may also be achieved by providing a controlling method of an image forming device, the controlling method including reading latest version information of firmware of the image forming device or software of a host device from a customer replaceable unit memory (CRUM) provided to a recording material storage medium of the image forming device, collecting present version information of the firmware of the image forming device and present version information of the software of the host device, and providing an old version notification message if at least one of the present version information of the firmware of the image forming device and the present version information of the software of the host device is old compared to the latest version information.

The method may further include displaying at least one of the old version notification message, information regarding a site offering a download of the latest version of the at least one of the firmware and the software, a latest version update request message, and a list of present software of the host device.

The collecting of the present version information of the firmware of the image forming device and the present version information of the software of the host device may include collecting the present version information of the firmware of the image forming device and the present version information of the software of the host device in response to an input version check command.

The collecting of the present version information of the firmware of the image forming device and the present version information of the software of the host device may include collecting the present version information of the firmware of the image forming device and the present version information of the software of the host device when the recording material storage medium is installed in the image forming device.

The foregoing and/or other aspects of the present invention may also be achieved by providing a method of controlling an image forming device, the method including storing information regarding a latest version of firmware of the image forming device on a replaceable memory unit of the image forming device, and comparing the stored information regarding the latest versions of the firmware with information regarding a current version of the firmware to determine whether the current version of the firmware is the latest version of the firmware.

Embodiments of the invention will now be described, by way of example, with reference to the accompanying drawings, in which:
Figure 1 is a schematic block diagram illustrating a printer according to an embodiment of the invention;
Figure 2 is a flow chart illustrating a method of controlling the printer of Figure 1;
Figure 3 is a schematic block diagram illustrating a printing system according to an embodiment of the invention; and
Figure 4 is a flow chart illustrating a method of controlling the printing system of Figure 3.

Reference will now be made in detail to embodiments of the present invention, examples of which are illustrated in the accompanying drawings, wherein like reference numerals refer to the like elements throughout.

In the following description, a printer will be described. However, the invention is not limited to being implemented using a printer, other image forming devices could alternatively be used.

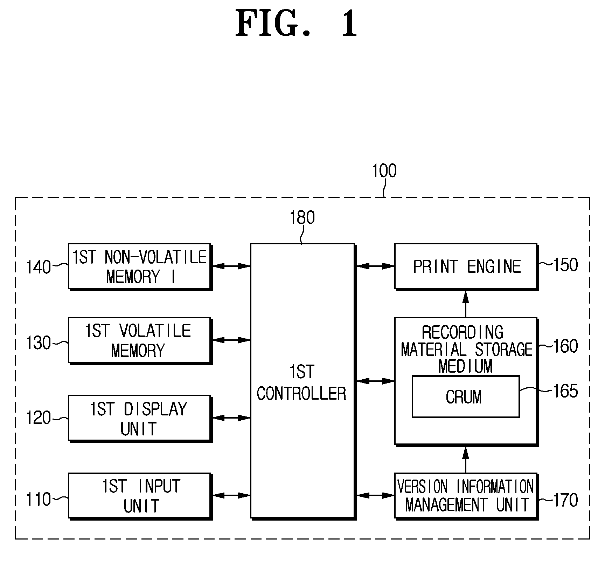

Figure 1 is a schematic block diagram illustrating a printer 100 according to an embodiment of the invention.

Referring to Figure 1, the printer 100 includes a first input unit 110, a first display unit 120, a first volatile memory 130, a first non-volatile memory 140, a print engine 150, a recording material storage medium 160, for instance a toner cartridge, a version information management unit 170 and a first controller 180.

The first input unit 110 can include at least one button allowing users to input desired commands. A user command signal input through the first input unit 110 is provided to the first controller 180, and the first controller 180 controls the printer 100 in response to the user command signal.

A version check command can also be input to the first input unit 110. The version check command is a command requesting the first controller 180 to determine whether version information of the firmware of the printer 100 is old compared to latest version information.

The first display unit 120 displays notification messages to be viewed by the user in response to a user command or under the control of the first controller 180.

The first display unit 120 also displays an old version notification message. The old version notification message is a message to notify the user that the version information of the firmware of the printer 100 is old compared to the latest version information. Moreover, the first display unit 120 can display information regarding a site that offers a download of the latest version of the firmware. For example, the displayed information can include an internet side address offering (free) downloads of the latest version of the firmware. The first display unit 120 can also display a latest version update request message. The latest version update request message is a message to notify the user that a request has been made to update the version information of the firmware.

The first volatile memory 130 is controlled by the first controller 180 to temporarily store data that is produced during operations of the printer 100.

The first non-volatile memory 140 stores first control programs to control general operations of the printer 100. For example, the first non-volatile memory 140 can be flash memory, a PROM (programmable read-only memory), and the like.

The first non-volatile memory 140 stores the firmware of the printer 100, which relates to printing operations of the printer 100.

The print engine 150 performs printing operations under the control of the first controller 180. That is, the print engine 150 executes the printing operation using a recording material, for instance toner, stored in the recording material storage medium 160.

The recording material storage medium 160 stores the recording material that is used to print the document on printing paper. Accordingly, the recording material storage medium 160 can be a toner cartridge.

In the case of a printer for printing black and white images, the printer 100 only uses a single-color recording material, so one recording material storage medium 160 is sufficient for the printer 100.

When the printer 100 is a color printer, the printer 100 can also use one recording material storage medium 160. However, in this case, the recording material storage medium 160 is divided into a plurality of partitioned spaces to store recording material according to colors thereof. However, the color printer can use a plurality of recording material storage mediums 160 to store different colors of recording material, respectively.

As illustrated in Figure 1, a customer replaceable unit memory (CRUM) 165 can be provided at a designated portion of the recording material storage medium 160. The CRUM 165 can be detachably attached to a case of the recording material storage medium 160. However, it is also possible that the CRUM 165 is fixedly mounted on the case of the recording material storage medium 160. The recording material storage medium 160 can be replaced when the recording material contained therein is exhausted.

The CRUM 165 can store information about a residual quantity of the recording material stored in the recording material storage medium 160, the number of pages printed using the recording material, the printer model name, the printer serial number, information regarding customer replaceable units used with the printer 100, and control programs to control the respective customer replaceable units.

The CRUM 165 stores information regarding the latest version of the firmware used when the recording material storage medium 160 was released on the market. Also, the CRUM 165 can store information regarding a website offering downloads of the latest version of the firmware.

The version information management unit 170 reads the information regarding the latest version of firmware from the CRUM 165, under the control of the first controller 180. The version information management unit 170 then compares the information regarding the latest version with version information regarding a present version of the firmware obtained by the first controller 180.

As described above, the first controller 180 controls and manages the printer 100 according to the first control programs stored in the first non-volatile memory 140.

The first controller 180 collects the version information of the present version of the firmware of the printer 100 when the recording material storage medium 160 is installed at a predetermined position in the printer 100. The first controller 180 can also collect the version information of the present version of the firmware of the printer 100 when the version check command is input through the first input unit 110.

When the present version of the firmware is an old version according to the comparison result provided by the version information management unit 170, the first controller 180 can control the first display unit 120 to display the old version notification message, the information regarding the site offering the download of the latest version of the firmware, the latest version update request message, etc. The information regarding the site offering the download of the latest version of the firmware is read from the CRUM 165 and then displayed on the first display unit 120.

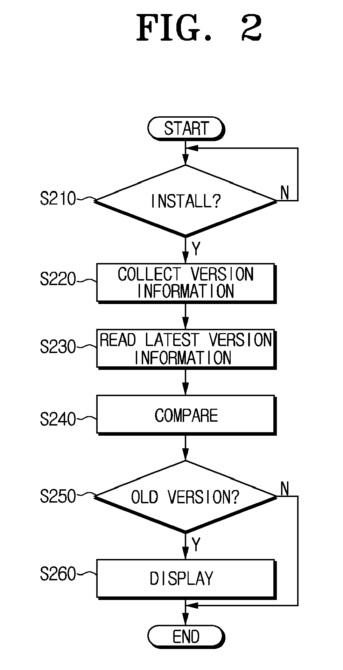

Figure 2 is a flow chart illustrating a method of controlling the printer 100 of Figure 1 according to an embodiment of the present invention.

Referring to Figures 1 and 2, when the recording material storage medium 160 is installed at the predetermined position inside the printer 100 (S210), the first controller 180 collects the version information of the present version of the firmware of the printer 100 (S220). The version information of the present version of the firmware can also be collected when the version check command is entered, by a user, via the first input unit 110.

Under the control of the first controller 180, the version information management unit 170 reads the latest version information of the firmware from the CRUM 165 (S230).

The first controller 180 then controls the version information management unit 170 to compare the version information of the present version of the firmware with the latest version information of the firmware (S240).

If the result of the comparison is that the version information of the present version of the firmware is old compared to the latest version information of the firmware (S250), the first controller 180 controls the first display unit 120 to display the old version notification message (S260). The first controller 180 can also control the first display unit 120 to display the information regarding the site offering the download of the latest version of the firmware and/or the latest version update request message (S260).

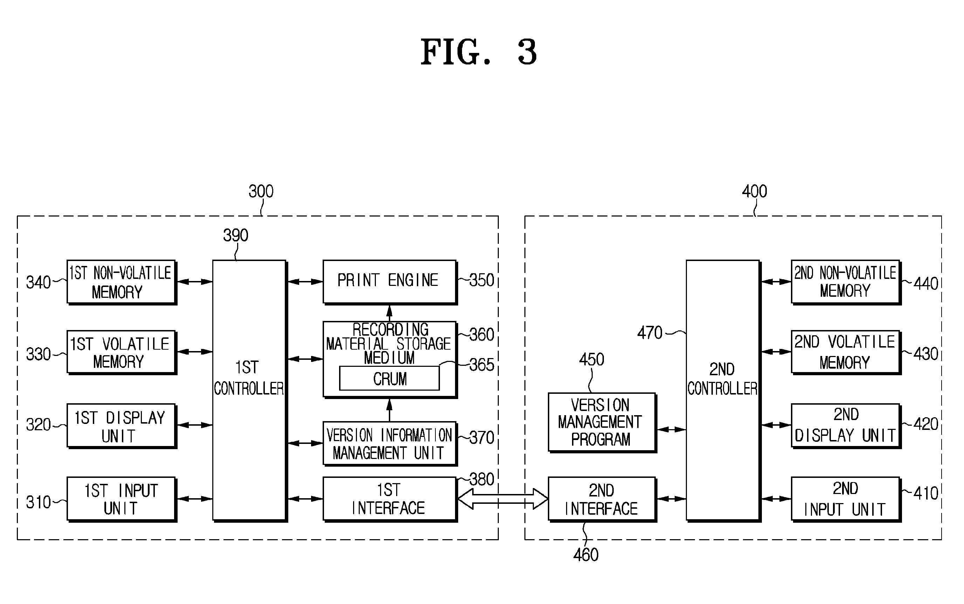

Figure 3 is a schematic block diagram illustrating a printing system according to an embodiment of the invention.

Referring to Figure 3, the printing system includes a printer 300 and a host device 400, for instance a computer.

The printer 300 includes a first input unit 310, a first display unit 320, a first volatile memory 330, a first non-volatile memory 340, a print engine 350, a recording material storage medium 360, a version information management unit 370, a first interface 380 and a first controller 390. The recording material storage medium 360 includes a customer replaceable unit memory (CRUM) 365. Operations of the first input unit 310, the first display unit 320, the first volatile memory 330, the first non-volatile memory 340, the print engine 350, the recording material storage medium 360, the CRUM 365, the version information management unit 370, and the first controller 390 of the printer 300 of Figure 3 are similar to those of the first input unit 110, the first display unit 120, the first volatile memory 130, the first non-volatile memory 140, the print engine 150, the recording material storage medium 160, the CRUM 165, the version information management unit 170, and the first controller 180 of the printer 100 of Figure 1, respectively, and detailed descriptions thereof are therefore omitted.

A version check command entered by a user via the first input unit 310 is a command to request the first controller 390 to check whether a present version of firmware of the printer 300 is a latest version of the firmware and to check whether a present version of software of the host device 400, for instance software relating to printing functions of the host device 400 and the printer 300, is the latest version of the software.

The present versions of the firmware of the printer 300 and the software of the host device 400 can be displayed along with the old version notification message, the site information, and the latest version update request message that are displayed on the first display unit 320.

The CRUM 365 stores information regarding the latest version of the firmware, and site information of a download of the latest version of the firmware, and also information regarding the latest version of the software and site information of a download of the latest version of the software.

The first interface 380 provides a wireless or wired interface between the printer 300 and the host device 400.

The first controller 390 collects present version information of the firmware and present version information of the software when the recording material storage medium 360 is installed in the predetermined position in the printer 300 or a version check command is made by a user via the first input unit 310. The first controller 390 can also collect the present version information of the firmware and the present version information of the software after receiving a version check request signal from the host device 400.

In such a case, the first controller 390 generates a version information request signal in order to collect the version information of the software of the host device 400, and transmits the version information request signal to the host device 400 through the first interface 380.

The first controller 390 controls the version information management unit 370 to read the latest version information of the firmware and the latest version information of the software stored in the CRUM 365, and to compare latest version information of the firmware and the software with the collected version information of the firmware and the software. Accordingly, the version information management unit 370 determines whether the present versions of the firmware and the software are old versions.

If the version information management unit 370 determines that the present versions of the firmware and the software are old versions, the first controller 390 generates an old version notification signal and transmits the old version notification signal to the host device 400 through the first interface 380. The site information, for instance information providing details of a site offering downloads of the latest versions of the firmware and the software, stored in the CRUM 365, can also be transmitted to the host device 400 under the control of the first controller 390.

In the embodiment of Figure 3, instead of or in addition to transmitting the old version notification signal to the host device 400, the first controller 390 can control the first display unit 320 to display the old version notification message. In this case, the first display unit 320 can display the old version notification message, the website information for downloads of the latest versions of the firmware and the software, the latest version update request message, and/or a list of the present software stored by the host device 400.

As illustrated in Figure 3, the host device 400 includes a second input unit 410, a second display unit 420, a second volatile memory 430, a second non-volatile memory 440, a version management program 450, a second interface 460 and a second controller 470. The host device 400 is an information processing device, such as a personal computer (PC), a portable PC, a personal digital assistant (PDA), or the like.

The second input unit 410 is used to input user commands to the host device 400. The second input unit 410 can include a keyboard, a mouse, etc. A user command signal input through the second input unit 410 is provided to the second controller 470. The second controller 470 controls the host device 400 in response to the input user command signal.

The second input unit 410 can be used by a user to input the version check command. When the version check command is input, the second controller 470 generates the version check request signal and transmits the version check request signal to the printer 300 via the second interface 460. Upon receiving the version check request signal, the printer 300 compares the present version information of the firmware of the printer 300 and the software of the host device 400 with the latest version information of the firmware and the software stored in the CRUM 365.

The second display unit 420 displays notification messages to be viewed by the user in response to a user command or under the control of the second controller 470.

The second display unit 420 displays the old version notification message, the information relating to the site that offers one or more downloads of the latest versions of the firmware and the software, the latest version update request message, and/or the list of the present software of the host device 400.

The second volatile memory 430 temporarily stores data that is produced during operations of the host device 400.

The second non-volatile memory 440 stores second control programs to control general operations of the host device 400. The second non-volatile memory 440 also stores the software relating to printing operations and additional functions of the printer 300.

The version management program 450 is a program for managing version information of the software of the host device 400, and provides the list the present software of the host device 400. The version management program 450 also provides the version information of the present software of the host device. The list of the present software and the present version information of the software can be stored in the second non-volatile memory 440. The version management program 450 can be provided as part of a printer driver such that the version management program 450 can be controlled as a version management function of the printer driver.

The second interface 460 of the host device 400 communicates with the first interface 380 of the printer 300 to exchange information between the printer 300 and the host device 400. The second interface 460 can provides wireless or wired communicate between the host device 400 and the first interface 380 of the printer 300.

As described above, the second controller 470 controls and manages the general operations of the host device 400 according to the second control programs stored in the second non-volatile memory 440.

Under the control of the second controller 470, the second display unit 420 displays the old version notification message in response to the old version notification signal from the printer 300, the information regarding the website that offers one or more downloads of the latest versions of the firmware and the software, the latest version update request message, and the list of the present software of the host device 400.

In response to the version information request signal from the printer 300, the second controller 470 controls the version management program 450 to provide the list of the present software and the version information of the present software, and transmits them to the printer 300 via the second interface 460.

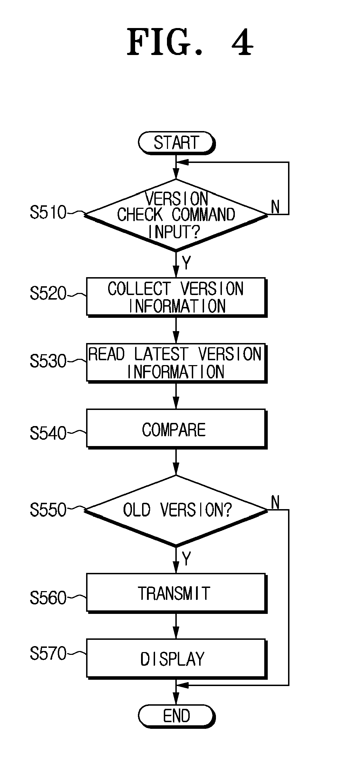

Figure 4 is a flow chart illustrating a method of controlling the printing system of Figure 3 according to an embodiment of the invention.

Referring to Figures 3 and 4, when the version check command is received via the first input unit 310 (S510), the first controller 390 collects the present version information of the firmware of the printer 300 and the software of the host device 400 (S520). The present version information of the firmware of the printer 300 and the software of the host device 400 can also be collected when the recording material storage medium 360 is inserted into the printer 300.

The first controller 390 then controls the version information management unit 370 to read the latest version information of the firmware of the printer 300 and the software of the host device 400 from the CRUM 365 (S530).

The version information management unit 370 then compares the collected present version information of the firmware and the software with the latest version information of the firmware and the software to determine whether the present versions of the firmware and the software are out of date (S540).

If the present version information of the firmware and the software indicates that the version of the present firmware or software is older than the latest version (S550), the first controller 390 generates the old version notification signal and transmits the old version notification signal to the host device 400 via the first interface 380 (S560).

The second display unit 420 of the host device 400 then displays the old version notification message based on the transmitted old version notification signal generated by the second controller 470 (S570). In addition, the second controller 470 can control the second display unit 420 to display the information regarding the website offering downloads of the latest versions of the firmware and the software, the latest version update request message, and the list of the present software of the host device 400 (S570).

The software of the host device 400 relating to printing functions can, for instance, include a driver for controlling the image forming device, such as a printer driver, and various other types of applications relating to the image forming device. The applications relating to the image forming device can include network image forming device related applications (e.g., SyncThru, SetIP, and IPP Client), image forming device status related applications (e.g., Status Monitor), scanning related applications (e.g., ScanToPC, Network Scan, and SmartThru), a scan panel remote control application (Remote Control Panel: RCP), and the like. In addition, it is apparent that other types of applications relating to the image forming device can also be included in the software of the invention.

The invention may be embodied in hardware, software, or a combination thereof. For example, the invention may be implemented by a computer running a program from a computer-readable medium, including but not limited to storage media such as magnetic storage media (ROMs, RAMs, floppy disks, magnetic tapes, etc.), optically readable media (CD-ROMs, DVDs, etc.), and data signals, for instance transmissions over the internet. The invention may be embodied as a computer-readable medium storing computer-readable program code that causes a number of computer systems connected via a network to effect distributed processing.

As described above, in an image forming device, a host device connected to the image forming device, an image forming system and a controlling method thereof according to various embodiments of the invention, a present version of firmware and/or software is compared with a latest version and the comparison result is provided to a user, such that the user can update the firmware and/or the software. In addition, the user can be provided with information regarding a site, for instance a website, that offers a download of the latest version of the firmware and/or the software, which is conveniently accessible to the user. Moreover, in situations in which the capacity of the CRUM is minimal, only essential information can be provided to the CRUM. Accordingly, the cost of using unnecessarily large-capacity memory can be prevented. By providing the CRUM to an authenticated recording material storage medium, a user can be encouraged to purchase an authenticated product. According to embodiments of the invention, a user is given an opportunity to update present versions of firmware and/or software and information related thereto, and the update procedure itself can be provided as an option. Accordingly, if a system fails and after-sales service is performed, a cause of the failure can be more easily explained.

Although a number of embodiments of the invention have been shown and described, it will be appreciated by those skilled in the art that changes may be made in these embodiments without departing from thescope of the invention as defined by the appended claims.

## Claims

1. An image forming device, comprising:
a recording material storage medium for storing a recording material;
a replaceable memory unit for storing information relating to a latest version of firmware for the image forming device; and
a comparison unit for comparing information relating to a present version of firmware used by the device with the information relating to the latest version of the firmware to determine whether the present version of the firmware is the latest version.

2. An image forming device according to claim 1, further comprising:
a display unit to notify a user when the present version of the firmware is determined not to be the latest version of the firmware.

3. An image forming device according to claim 2, wherein the information regarding the latest version of the firmware stored in the replaceable memory unit includes an address of a site to download the latest version of the firmware, and the display unit displays the address of the site for downloading the latest version of the firmware when the present version of the firmware is determined not to be the latest version of the firmware.

4. An image forming device according to claim 1, 2 or 3, wherein the comparison unit automatically compares the present version of the firmware with the information relating to the latest version of the firmware whenever the replaceable recording material stored is replaced.

5. An image forming device according to any preceding claim, wherein the comparison unit compares the present version of the firmware with the information relating to the latest version of the firmware in response to an input command.

6. An image forming device according to any one of the preceding claims, further comprising means for connecting the device to a host device, wherein the replaceable memory unit is further arranged to store information relating to a latest version of software of the host and wherein the comparison unit is further configured to compare a present version of software of the host device with the information relating to the latest version of the software to determine whether the present version of the software is the latest version of the software.

7. An image forming device according to claim 6, wherein the display unit is further arranged to notify a user when the present version of the software is determined not to be the latest version of the software.

8. A device according to claim 6 or 7, further comprising:
an input unit to input a version check command; and
a controller for collecting the information regarding the present version of the firmware of the image forming device and the information regarding the present version of the software of the host device in response to the input version check command.

9. A recording material storage medium usable with an image forming device, comprising:
a customer replaceable memory for storing information about a latest version of firmware used in the image forming device.

10. The recording material storage medium according to claim 9, wherein the information about the latest version of the firmware includes an address of a site from which to download the latest version of the firmware used in the image forming device.

11. The recording material storage medium according to claim 9 or 10, wherein the customer replaceable unit memory stores information about a latest version of software used in a host device connectable to the image forming device.

12. A host device connectable to an image forming device for forming an image using at least one recording material stored in a recording material storage medium, the host device comprising:
an interface to receive an old version notification signal from the image forming device corresponding to a determination that a present version of firmware of the image forming device or a present version of software of the host device is old compared to latest version information of the firmware of the image forming device or latest version information of the software of the host device, the latest version information being stored in a customer replaceable unit memory provided to the recording material storage medium of the image forming device; and
a controller to provide an old version notification message based on the old version notification signal.

13. The host device according to claim 12, further comprising:
a display unit to display at least one of the old version notification message, information regarding sites offering a download of latest versions of the firmware and the software, a latest version update request message, and a list of present software of the host device.

14. The host device according to claim 12 or 13, further comprising:
an input unit to input a version check command, wherein the controller generates a version check request signal based on the version check command and transmits the version check request signal to the image forming device.

15. The host device according to claim 12, 13 or 14, further comprising:
a version management program to provide a list of the software of the host device and present version information of the software, wherein the controller transmits the list of software of the host device and the present version information of the software provided by the version management program to the image forming device in response to a version information request signal from the image forming device.

16. An image forming system, comprising:
a host device according to any one of claims 12 to 15; and
an image forming device according to any one of claims 1 to 8.

17. The image forming system according to claim 16, wherein the image forming device transmits an old version notification signal to the host device when the image forming device determines that at least one of the firmware and the software is not the latest version.

18. The image forming system according to claim 16 or 17, wherein the host device transmits a version check signal to the image forming device, and the image forming device compares the present version information of the firmware and the present version information of the software with the latest version information of the firmware and the software in response to the transmitted version check signal.

19. The image forming system according to claim 16, 17 or 18, wherein the image forming device requests the host device for the present version information of the software and the host device transmits the present version information of the software to the image forming device in response to the request.

20. A controlling method of an image forming device, comprising:
reading latest version information of firmware of the image forming device or software of a host device from a customer replaceable unit memory (CRUM) provided to a recording material storage medium of the image forming device;
collecting present version information of the firmware of the image forming device and present version information of the software of the host device; and
providing an old version notification message if at least one of the present version information of the firmware of the image forming device and the present version information of the software of the host device is old compared to the latest version information.

21. The method according to claim 20, further comprising:
displaying at least one of the old version notification message, information regarding a site offering a download of the latest version of the at least one of the firmware and the software, a latest version update request message, and a list of present software of the host device.

22. The method according to claim 21, wherein the collecting of the present version information of the firmware of the image forming device and the present version information of the software of the host device comprises:
collecting the present version information of the firmware of the image forming device and the present version information of the software of the host device in response to an input version check command.

23. The method according to claim 21 or 22, wherein the collecting of the present version information of the firmware of the image forming device and the present version information of the software of the host device comprises:
collecting the present version information of the firmware of the image forming device and the present version information of the software of the host device when the recording material storage medium is installed in the image forming device.

24. A method of controlling an image forming device, comprising:
storing information regarding a latest version of firmware of the image forming device on a replaceable memory unit of the image forming device; and
comparing the stored information regarding the latest version of the firmware with information regarding a current version of the firmware to determine whether the current version of the firmware is the latest version of the firmware.

25. A computer program which, when executed by a processor, causes the processor to perform a method according to any one of claims 20 to 24.
